# EUROPEAN PATENT SPECIFICATION

(11) **EP 0 335 340 B1**
(45) Date of publication and mention of the grant of the patent: **18.11.1993**
(21) Application number: 89105474.4
(22) Date of filing: 28.03.1989
(51) Int. Cl.: B60K 15/04

(54) **Automotive fuel filler**
Kraftstoff-Einfüllverschluss für Kraftfahrzeuge
Bouchon de remplissage de carburant pour automobiles

(30) Priority: 29.03.1988 IT 5303088 U; 03.03.1989 IT 5291089 U
(43) Date of publication of application: 04.10.1989
(73) Proprietor: FIAT AUTO S.p.A., 10135 Torino (IT)
(72) Inventor: Comoli, Elio, It-10100 Torino (IT)
(74) Representative: Jorio, Paolo

(56) References cited:
- DE-A- 2 310 233
- DE-A- 2 553 881
- DE-A- 2 922 611
- DE-A- 2 931 434
- FR-A- 2 593 753

## Description

The present invention relates to an automotive fuel filler designed for fitment inside a compartment between the inner and outer side panels on the vehicle, in the vicinity of and/or directly inside the wheel housing, and to the front or rear of the wheel housed inside the same.

Known fillers of the aforementioned type, such as, e.g. that of FR-A-2593753, comprise a number of connected parts designed to substantially define a cavity enabling troublefree insertion of the fuel delivery gun, and swirlfree fuel delivery. Said parts must also be designated in such a manner as to define means for assembling the filler cap.

To meet all these requirements, said parts are of fairly complex design, thus resulting in a large-size filler, which is often difficult to house inside the small space usually available in the vicinity of the vehicle fender.

Moreover, assembly of the filler on to the vehicle itself often involves a good deal of time and effort, for assembling the various component parts together and to the vehicle body.

The aim of the present invention is to provide a fuel filler of the aforementioned type, which is easy to produce, highly compact, and can be fitted quickly and easily on to the veicle body.

With this aim in view, according to the present invention, there is provided an automotive fuel filler, as defined in Claim 1.

The present invention will be described by way of example with reference to the accompanying drawings, in which:
Fig.1 shows a vertical section of the filler according to the present invention;
Fig.2 shows a front view of the filler according to the present invention;

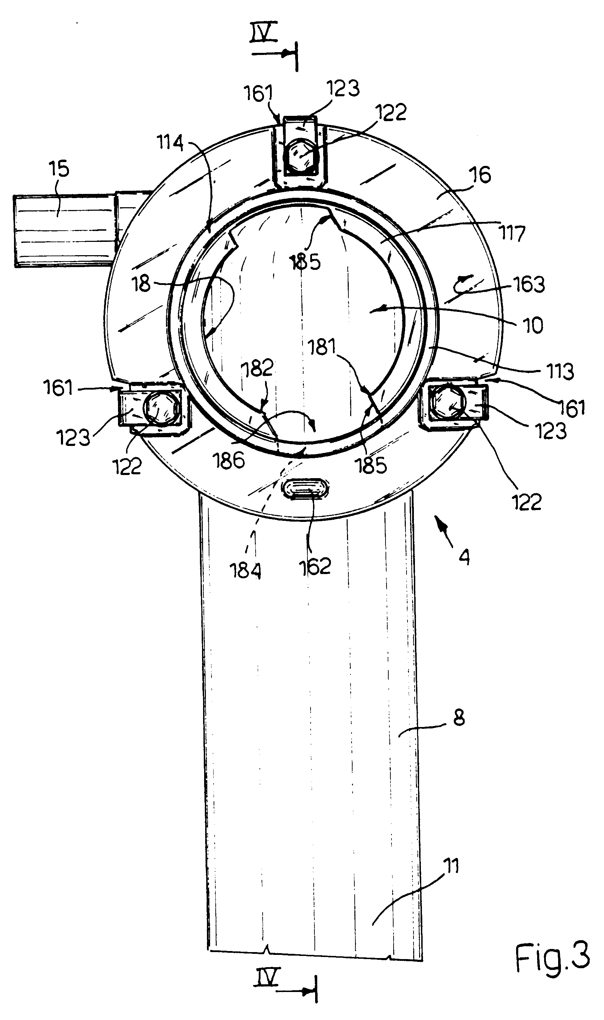

Fig.3 shows a front view of a variation of the filler according to the present invention;

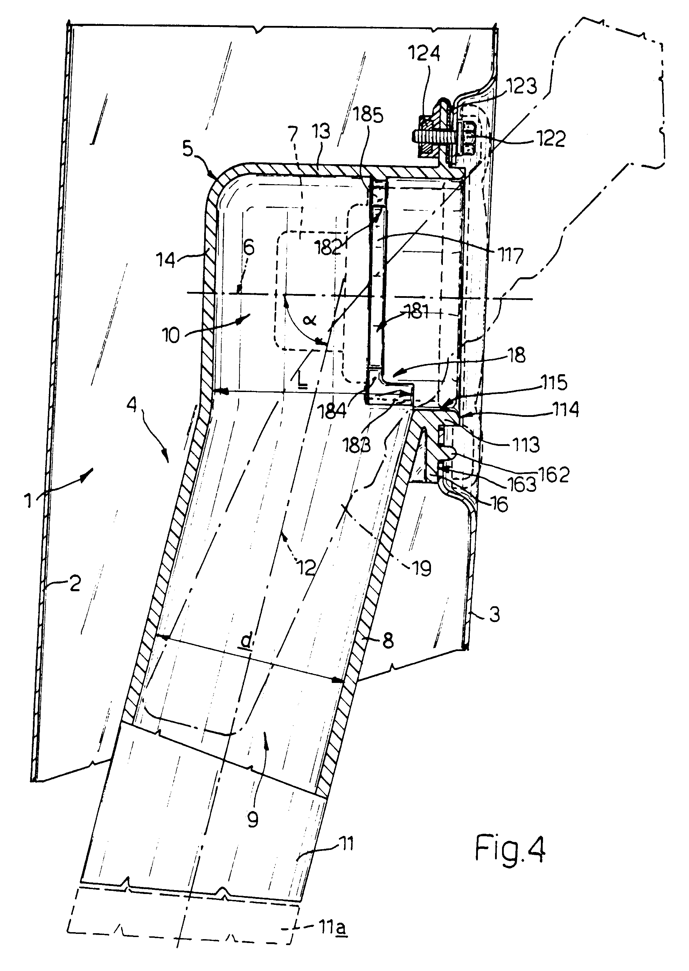

Fig.4 shows a section along line IV-IV of the Fig.3 filler.

The filler according to the present invention is housed inside a compartment 1 on the vehicle body, between an inner and outer side panel 2 and 3, e.g. inside a compartent formed in the vicinity of one of the fenders. The filler according to the present invention substantially comprises a body 4 defining a cup-shaped element 5 having a substantially horizontal axis 6 and designed to house, at least partially, a filler cap 7. Said body 4 defines a tubular element 8 having an axial hole 9 coming out inside a cavity 10 inside said cup-shaped element 5, and a bottom end 11 connectable in any convenient manner to the duct (not shown) connecting the filler to the fuel tank.

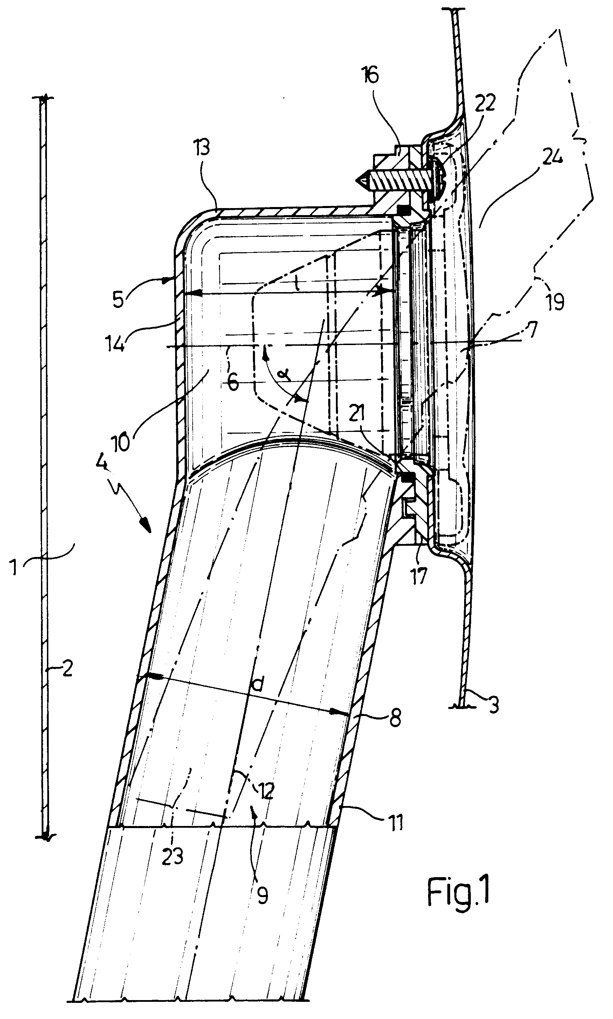

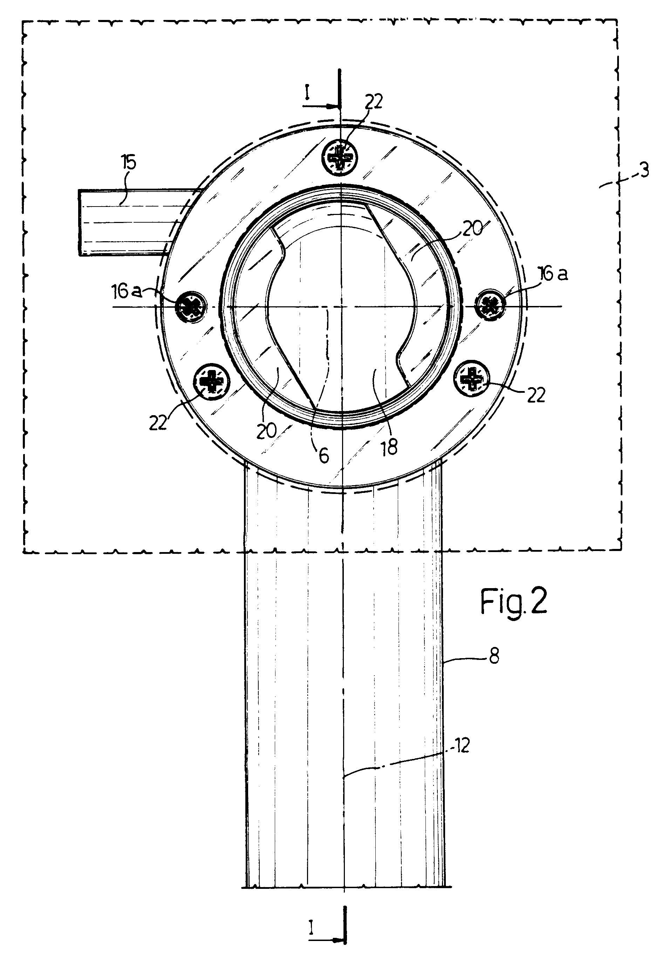

As shown in Fig. 2, the axis 12 of tubular element 8 lies in a plane containing axis 6 of cup-shaped element 5, and forms with said axis 6 an acute angle indicated α in Fig. 1. Said plane may lie in any manner, and is preferably vertical or horizontal. The axial length "1" of cavity 10 in cup-shaped element 5 is substantially equal to the diameter "d" of hole 9 in tubuler element 8. Therefore, when cup-shaped element 5 is defined by a cylindrical side wall 13 and a flat end wall 14, body 4 is defined externally by a first cylindrical solid (element 5) and a second cylindrical solid (element 8) intersecting the first at the side wall of the same. Cup-shaped element 5 presents a vent formed inside a duct 15 connectable to a tube (not shown) communicating with the fuel tank or outside atmosphere.

Cup-shaped element 5 also presents a flange 16 enabling assembly of body 4, and consequently also the filler, to outer body panel 3 as described later on.

The filler according to the present invention also comprises a ring 17 secured to flange 16 via connecting means, e.g. screws 16a, each of which fits through a hole in ring 17 and into a respective threaded hole in flange 16. Said means may also consist, for example, of welds.

Ring 17 defines a passage 18 for the insertion of a fuel delivery gun 19, and presents a shaped edge 20 cooperating with a respective helical groove or other means for securing cap 7. Between ring 17 and flange 16, provision is made for a sealing member 21.

Body 4, together with ring 17 and seal 21, is fitted easily on to body side panel 3 via screws 22, which fit through holes inside side panel 3 and into respective threaded holes in flange 16.

The filler according to the present invention may be fitted quickly and easily on to the vehicle body, by screwing ring 17 and seal 21 to body 4 by means of screws 16a, and then securing the assembly so formed to side panel 3 using screws 22.

Moreover, as shown in Fig. 1 the overall size of the filler, particularly in the direction of horizontal axis 6, is extremely compact, only slightly greater then the length "l" of cavity 10 in cup-shaped element 5, and the axial length of cap 7 partially housed inside cavity 10.

Despite the compact size of the filler according to the present invention, delivery gun 19 may be inserted easily by simply inserting it downwards inside passage 18 (assuming the axis of tubular element 8 lies in a vertical plane) and towards end wall 14 of cup-shaped element 5. Once inserted, the bottom end 23 of gun 19 is housed inside hole 9 of tubular element 8, almost contacting the inner surface of hole 9, and the top portion 24 of gun 19 is fitted through passage 18, almost contacting ring 17. By appropriately selecting angle α, axis 12 may obviously be positioned angularly in relation to axis 6, for enabling correct positioning of gun 19 inside cavity 10 and hole 9.

Fuel delivery into the tank has been found to be swirl-free by virtue of the air being released from cavity 10 into the tank or externally through the hole formed in duct 15.

With reference to the variation shown in Fig.s 3 and 4, in which any details similar or identical to those already described are indicated using the same numbering system, the axial length "l" of cavity 10 defined inside element 5 is, in this case also, substantially equal to the diameter "d" of hole 9 in tubular element 8.

Inner cavity 10 of length "l" in cup-shaped element 5 is defined between end wall 14 of cup-shaped element 5 and passage 18 for the insertion of fuel delivery gun 19. Said passage 18 is formed, at least partialy, through a diaphragm 117, in turn, formed in one piece with body 4 inside cup-shaped element 5, and facing and substantially coaxial with the inlet end 113 of the same, which projects laterally in relation to tubular element 8 and coaxially with the rest of cup-shaped element 5.

Passage 18 for the insertion of fuel delivery gun 19 comprises a shaped seat 181 formed through diaphragm 117 and defined by an edge 182 designed to cooperate with, support and retain filler cap 7; and an axial groove 183 formed inside cup-shaped element 5, on side wall 13, between inlet end 113 and diaphragm 117, at the intersection of side wall 13 of cup-shaped element 5 and tubular element 8, and of such a length as to define a radial slot 184 in diaphragm 117.

Edge 182 is designed to cooperate with a helical groove or other known means (not shown) for securing cap 7. In particular, seat 181 comprises a pair of diametrically-opposed radial recesses 185, one of which is formed at radial slot 184 with which it defines, in gapfree manner, a single compartment 186 enabling the passage of delivery gun 19 through diaphragm 117.

Inlet end 113 of cup-shaped element 5 presents a peripheral flange 16 designed to fit on to outer side panel 3 of the vehicle body, and supporting filler assembly means consisting, in the non-limiting embodiment shown, of screws 122 fitted through flange 16 and supported on respective U clips 123 having threaded seats 124 and clipped on to flange 16 inside respective seats 161; and a locating pin 162 formed in one piece with and projecting axially in relation to the front surface 163 of flange 16. Inlet end 113 is also designed to cooperate in fluidtight manner with cap 7, both frontally, via edge 114, and radialy via inner lateral surface 115, depending on the type of cap 7 employed.

The advantages of the fuel filler according to the present invention will be clear from the foregoing description. In addition to being extremely easy to manufacture and assemble it is also axially compact, by virtue, in particular, of the cap 7 assembly seat being recessed inside cup-shaped element 5, while at the same time enabling troublefree insertion of the fuel delivery gun by virtue of radial slot 184 and the passage 186 formed by radial slot 184 and seat 181.

## Claims

1. A fuel filler for a vehicle comprising: a cup-shaped body (4) defined by a flat end wall (14) and a tubular wall (13) having a substantially horizontal axis when the fuel filler is mounted to the vehicle, said body (4) being designed to receive and house, at least partially, a fuel filler cap (7); and a tubular element (8), an inner hole (9) of which debouches in correspondence with a cavity (10) defined inside the cup-shaped body (4), one end of said tubular element (8) being connectable with a fuel delivery duct to a vehicle tank; the tubular element (8) having an axis (12) lying in the same plane in which the axis (6) of said cup-shaped body (4) lies and forming in said plane and with the latter axis (6) an angle (α) less than 90°;
the cup-shaped body (4) carrying means (17,117) for enabling assembly of said cap (7) to said filler and for defining a passage (18) for the insertion of a fuel delivery gun (19) inside the filler, and a peripheral flange (16) for assembling said body (4) to the vehicle body; **characterized** in that, in combination,
- said tubular wall (13) of the body (4) extends from the flat end wall (14) of the body (4);
- said tubular element (8) extends radially from the tubular wall (13) of the body (4);
- the tubular element (8) has an uniform inner diameter, the extension of which is substantially equal to the length of the horizontal axis (6) of the tubular wall (13) of said cup-shaped body (4).

2. A fuel filler as claimed in Claim 1, characterized in that said cup-shaped body (4) presents a vent formed in a duct (15) connectable to a tube communicating with the fuel tank.

3. A fuel filler as claimed in Claim 1 or 2, characterized in comprising a ring (17) designed to fit on to said flange (16) via connecting means (16a); said ring (17) defining a passage (18) for the insertion of said fuel delivery gun (19) and presenting a shaped edge (20) designed to receive said cap (7).

4. A fuel filler as claimed in Claim 3, characterized in that the connecting means comprise a first series of screws (16a) designed to fit through respective holes in said ring (17) and into respective threaded holes on said flange (16); the latter also presenting a second series of screws (22) for securing said filler to said vehicle body.

5. A fuel filler as claimed in Claim 3 or 4, characterized in that a sealing member (21) is provided between said ring (17) and said flange (16).

6. A fuel filler as claimed in Claim 1 or 2, characterized in that said cup-shaped body (4) comprises a diaphragm (117) formed in one piece with said body (4) inside the cup-shaped body (4) and facing substantially coaxial with an inlet end (113) of the cup-shaped body (4) provided with said peripheral flange (16); said inlet end (113) projecting laterally in relation to said tubular element (8), the length of said cavity (10) being defined between the end wall (14) of the cup-shaped body (4) and said diaphragm (117); and said passage (18) for the insertion of the fuel delivery gun (19) being formed at least partially through said diaphragm (117).

7. A fuel filler as claimed in Claim 6, characterized in that said passage (18) for the insertion of the delivery gun (19) comprises a shaped seat (181) formed through said diaphragm (117) and defined by an edge (182) cooperating with, supporting and retaining said filler cap (7); and an axial groove (183) formed inside said cup-shaped body (4), between said inlet coil (113) of the same and said diaphragm (117), at the intersection of a side wall (13) of said cup-shaped body (4) and said tubular element (8), and of such a length (1) as to define a radial slot (184) in said diaphragm (117).

8. A fuel filler as claimed in Claim 7, characterised by the fact that said shaped seat (181) formed through said diaphragm (117) comprises a pair of diametrically-opposed radial recesses (185), one of which is formed at said radial slot (184) on said diaphragm (117) for defining with the same, in gapfree manner, a single compartment (186).

9. A fuel filler as claimed in any one of the foregoing Claims from 6 to 8, characterised by the fact that said peripheral flange (16) is designed to fit on to a side panel (3) of said vehicle; said flange (16) supporting filler assembly means (122, 123) and a locating pin (162) formed in one piece with and projecting axially in relation to a front surface (163) or said said flange (16).

## Patentansprüche

1. Tankverschluß für ein Kraftfahrzeug, mit einem schalenförmigen Körper (4), der durch eine flache Endwand (14) und eine rohrförmige Wand (13), die bei im Fahrzeug eingebautem Verschluß eine im wesentlichen horizontale Achse hat, begrenzt ist, wobei der Körper (4) dazu vorgesehen ist, eine Verschlußkappe (7) zumindest teilweise aufzunehmen und zu umgeben; und mit einem rohrförmigen Element (8), dessen innere Öffnung (9) in einen im Inneren des schalenförmigen Körpers (4) begrenzten Hohlraum (10) mündet, wobei ein Ende des rohrförmigen Elements (8) durch eine
Kraftstoff-Versorgungsleitung mit einem Fahrzeugtank verbindbar ist; wobei das rohrförmige Element (8) eine Achse (12) hat, die in derselben Ebene liegt, in der die Achse (6) des schalenförmigen Körpers (4) liegt und die in dieser Ebene und mit der letzteren Achse (6) einen Winkel (α) von weniger als 90° bildet; wobei der schalenförmige Körper (4) Mittel (17, 117) aufweist, die das Zusammenfügen der Verschlußkappe (7) mit dem Einfüllverschluß ermöglichen und zum Definieren einer Durchlaßöffnung (18) zum Einführen einer Kraftstoff-Zapfpistole (19) in das Innere des Tankverschlusses dienen und einen peripheren Flansch (16) zum Zusammenfügen des Körpers (4) mit der Fahrzeugkarosserie trägt; dadurch gekennzeichnet, daß sich, in Kombination,
- die röhrenförmige Wand (13) des Körpers (4) von der flachen Endwand (14) des Körpers (4) weg erstreckt;
- das röhrenförmige Element (8) radial von der röhrenförmigen Wand (13) des Körpers (4) weg erstreckt;
- das rohrförmige Element (8) einen gleichförmigen inneren Durchmesser hat, dessen Länge im wesentlichen gleich der Länge der horizontalen Achse (6) der rohrförmigen Wand (13) des schalenförmigen Körpers (4) ist.

2. Tankverschluß nach Anspruch 1, dadurch gekennzeichnet, daß der schalenförmige Körper (4) eine in einer Leitung (15) ausgebildete Entlüftungsöffnung aufweist, die mit einer mit dem Kraftstofftank kommunizierenden Röhre verbindbar ist.

3. Tankverschluß nach Anspruch 1 oder 2, dadurch gekennzeichnet, daß er einen Ring (17) aufweist, der so ausgebildet ist, daß er über Verbindungsmittel (16a) mit dem Flansch (16) verbindbar ist, wobei der Ring (17) eine Durchlaßöffnung (18) zum Einführen der Kraftstoff-Zapfpistole (19) definiert und eine geformte Kante (20) aufweist, die zum Aufnehmen der Verschlußkappe (7) ausgebildet ist.

4. Tankverschluß nach Anspruch 3, dadurch gekennzeichnet, daß die Verbindungsmittel eine erste Gruppe von Schrauben (16a) aufweisen, die so ausgebildet sind, daß sie durch die jeweiligen Bohrungen im Ring (17) und in die jeweiligen Gewindebohrungen des Flansches (16) passen; wobei der letztere auch eine zweite Gruppe von Schrauben (22) zum Befestigen des Tankverschlusses an der Fahrzeugkarosserie aufweist.

5. Tankverschluß nach Anspruch 3 oder 4, dadurch gekennzeichnet, daß ein Abdicht-Element (21) zwischen dem Ring (17) und dem Flansch (16) angeordnet ist.

6. Tankverschluß nach Anspruch 1 oder 2, dadurch gekennzeichnet, daß der schalenförmige Körper (4) eine Versteifungswand (117) aufweist, die einstückig mit dem Körper (4) im Inneren des schalenförmigen Körpers (4) ausgebildet ist und die einem Einlaßende (113) des schalenförmigen Körpers (4), das an dem peripheren Flansch (16) vorgesehen ist, im wesentlichen koaxial gegenüberliegt; wobei das Einlaßende (113), bezogen auf das rohrförmige Element (8), lateral vorsteht, wobei die Länge des Hohlraums (10) durch die Endwand (14) des schalenförmigen Körpers (4) und die Aussteifungswand (117) begrenzt ist; und wobei die Durchlaßöffnung (18) zum Einführen der Kraftstoff-Zapfpistole (19) zumindest teilweise durch die Aussteifungswand (117) gebildet ist.

7. Tankverschluß nach Anspruch 6, dadurch gekennzeichnet, daß die Durchlaßöffnung (18) zum Einführen der Zapfpistole (19) eine geformte Aufnahme (181) aufweist, die durch die Aussteifungswand (117) gebildet und durch eine Kante (182) begrenzt ist, die mit der Verschlußkappe (7) des Tankverschlusses zusammenwirkt und diese stützt und hält; wobei eine axiale Nut (183) im Inneren des schalenförmigen Körpers (4) zwischen dessen Einlaßende (113) und der Aussteifungswand (117) an der Schnittstelle einer Seitenwand (13) des schalenförmigen Körpers (4) mit dem rohrförmigen Element (8) ausgebildet ist und die von solcher Länge (L) ist, daß sie einen radialen Schlitz (184) in dieser Aussteifungswand (117) begrenzt.

8. Tankverschluß nach Anspruch 7, dadurch gekennzeichnet, daß die durch die Aussteifungswand (117) gebildete, geformte Aufnahme (181) ein Paar diametral entgegengesetzter radialer Ausnehmungen (185) aufweist, von denen eine an dem radialen Schlitz (184) an der Aussteifungswand (117) ausgebildet ist, um mit dieser spaltfrei einen einstückigen Raum (186) zu begrenzen.

9. Tankverschluß nach irgendeinem der vorangehenden Ansprüche 6-8, dadurch gekennzeichnet, daß der periphere Flansch (16) so ausgebildet ist, daß er mit einer Seitenwand (3) des Fahrzeugs zusammenbaubar ist, wobei der Flansch (16) Mittel (122, 123) zum Zusammenfügen des Tankverschlusses und einen Paßstift (162) trägt, der einstückig mit und bezogen auf eine vordere Fläche (163) axial vorstehend an dem Flansch (16) ausgebildet ist.

## Revendications

1. Ensemble de remplissage de carburant pour un véhicule comprenant : un corps en forme de coupe (4) délimité par une paroi terminale plate (14) et une paroi tubulaire (13) ayant un axe pratiquement horizontal lorsque l'ensemble de remplissage de carburant est monté sur le véhicule, ce corps (4) étant conçu pour recevoir et loger, au moins partiellement, un bouchon de remplissage de carburant (7); et un élément tubulaire (8), dont l'alésage interne (9) débouche en correspondance avec une cavité (10) délimitée à l'intérieur du corps en forme de coupe (4), une extrémité de l'élément tubulaire (9) pouvant être raccordée à un conduit de fourniture de carburant à un réservoir du véhicule, l'élément tubulaire (8) ayant un axe (12) situé dans le même plan que l'axe (6) du corps en forme de coupe (4) et formant dans ce plan avec l'axe (6) un angle (α) inférieur à 90°,
le corps en forme de coupe (4) portant des moyens (17,117) pour permettre le montage du bouchon (7) sur l'ensemble de remplissage et pour délimiter un passage (18) pour l'introduction d'un bec de fourniture de carburant (19) à l'intérieur de l'ensemble de remplissage, et une bride périphérique (16) pour monter le corps (4) sur la carrosserie du véhicule, caractérisé en ce que, en combinaison,
la paroi tubulaire (13) du corps (4) s'étend depuis la paroi terminale plane (14) du corps (4);
l'élément tubulaire (8) s'étend radialement depuis la paroi tubulaire (13) du corps (4);
l'élément tubulaire (8) a un diamètre intérieur constant, dont la valeur est pratiquement égale à la longueur de l'axe horizontal (6) de la paroi tubulaire (13) du corps en forme de coupe (4).

2. Ensemble de remplissage de carburant selon la revendication 1, caractérisé en ce que le corps en forme de coupe (4) présente une mise à l'air libre formée dans un conduit (15) pouvant être raccordé à un tube communiquant avec le réservoir de carburant.

3. Ensemble de remplissage de carburant selon la revendication 1 ou la revendication 2, caractérisé en ce qu'il comprend une bague (17) conçue pour être montée sur la bride (16) par l'intermédiaire de moyens de fixation (16a), la bague (17) définissant un passage (18) pour l'introduction du bec de fourniture de carburant (19) et présentant un bord de forme (20) conçu pour recevoir le bouchon (7).

4. Ensemble de remplissage de carburant selon la revendication 3, caractérisé en ce que les moyens de fixation comprennent une première série de vis (16a) conçues pour passer à travers des trous respectifs dans la bague (17) et se visser dans des trous taraudés respectifs sur la bride (16), celle-ci présentant également une deuxième série de vis (22) pour fixer l'ensemble de remplissage sur la carrosserie du véhicule.

5. Ensemble de remplissage de carburant selon la revendication 3 ou la revendication 4, Caractérisé en ce qu'un élément d'étanchéité (21) est disposé entre la bague (17) et la bride (16).

6. Ensemble de remplissage de carburant selon la revendication 1 ou la revendication 2, caractérisé en ce que le corps en forme de coupe (4) comprend un diaphragme (117) formé d'un seul tenant avec le corps (4) à l'intérieur du corps en forme de coupe (4) et en vis-à-vis de, et pratiquement coaxial avec, une extrémité d'entrée (113) du corps en forme de coupe (4) présentant cette bride périphérique (16), cette extrémité d'entrée (113) se projetant latéralement par rapport à l'élément tubulaire (8), la longueur de la cavité (10) étant délimitée par la paroi terminale (14) du corps en forme de coupe (4) et par ce diaphragme (117), le passage (18) pour l'introduction du bec de fourniture de carburant (19) étant formé au moins partiellement à travers ce diaphragme (117).

7. Ensemble de remplissage de carburant selon la revendication 6, caractérisé en ce que le passage (18) pour l'introduction du bec de fourniture (19) comprend un siège de forme (181) formé à travers le diaphragme (117) et délimité par un bord (182) coopérant avec le bouchon de remplissage (7), le supportant et le retenant; et une rainure axiale (183) formée à l'intérieur du corps en forme de coupe (4) entre l'extrémité d'entrée (113) de ce corps et le diaphragme (117), au niveau de l'intersection d'une paroi latérale (13) de ce corps en forme de coupe (4) et de l'élément tubulaire (8), et ayant une longueur (ℓ) définissant une fente radiale (184) dans le diaphragme (117).

8. Ensemble de remplissage de carburant selon la revendication 7, caractérisé en ce que le siège de forme (181) formé à travers le diaphragme (117) comprend deux évidements radiaux diamétralement opposés (185), dont l'un est formé au niveau de la fente radiale (184) sur le diaphragme (117) pour délimiter, sans discontinuité, avec celui-ci, un seul compartiment (186).

9. Ensemble de remplissage de carburant selon l'une des revendications précédentes 6 à 8, caractérisé en ce que la bride périphérique (16) est conçue pour être montée sur un panneau latéral (3) du véhicule, cette bride (16) supportant des moyens de montage de l'ensemble de remplissage (122,123) et un téton de positionnement (162) formé d'un seul tenant avec une surface frontale (163) de la bride (16) et se projetant axialement par rapport à celle-ci.
